# EUROPEAN PATENT SPECIFICATION

(11) **EP 0 752 507 B1**
(45) Date of publication and mention of the grant of the patent: **04.12.2002**
(21) Application number: 96110608.5
(22) Date of filing: 01.07.1996
(51) Int. Cl.: E04F 10/06, B60P 3/34

(54) **Supporting bracket for the arms of a canopy with roll-up awning, particularly for campers, caravans, and the like**
Tragkonsole für die Arme einer Markise mit aufrollbarem Tuch, insbesondere für Campingwagen, Wohnwagen o.ä.
Fixation de support pour les bras d'une marquise à bâche enroulable, en particulier pour véhicules de camping, caravanes et semblables

(30) Priority: 07.07.1995 IT MI950484
(43) Date of publication of application: 08.01.1997
(73) Proprietor: Pozzi, Carlo Maurizio, CH-6977 Ruvigliana (CH)
(72) Inventor: Pozzi, Carlo Maurizio, CH-6977 Ruvigliana (CH)
(74) Representative: Modiano, Guido, Dr.-Ing.

(56) References cited:
- EP-A- 0 576 829
- EP-A- 0 593 389
- WO-A-88/07115
- DE-U- 9 318 456
- US-A- 4 469 159

## Description

The present invention relates to a profiled bracket for supporting the caliper-like openable arms of a covering with roll-up awning, particularly for canopies for caravans, campers, and the like.

It is well-known that so-called canopies with roll-up awning are generally movable coverings, i.e., coverings with an awning that can be unrolled from, and rolled up onto, a roller that is enclosed within a box that is rigidly coupled to a supporting wall, such as faces of doors and shop windows, side walls of caravans and campers in general; the awning can thus be spread out in the shape of a roof and then returned to a retracted position inside said box.

Current canopies with roll-up awning, to which the present invention relates, are normally constituted by: a supporting bracket, substantially a profiled element to be coupled to a wall, having a preset length, whose profile includes means for supporting, by means of an additional bracket (or two identical separated and aligned brackets), two or more arms oscillating on pivots that are coupled to said additional bracket and openable in a caliper-like fashion; a roller for rolling up the covering awning: a combined profile and front that is rigidly coupled to the ends of said arms; snap-together means for allowing the engagement of the arm supporting bracket to the bracket that is fixed to the wall: and additional means, substantially tensioning means, to ensure the stable coupling between the wall-mounted bracket and the bracket that supports the extendable arms.

The unrolling and rolling-up of the awning on the roller are achieved, in some cases, by means of kinematic systems that are actuated by means of a crank or the like and, in other cases, by means of an electric motor.

Current canopies of the above mentioned type are usually made of aluminum profiles; therefore, their structures, strengths, and functionalities are fully acceptable in normal atmospheric and environmental conditions.

A supporting bracket with the features of the preamble of claim 1 is shown in US-A-4469159.

In practice, however, they can have serious drawbacks, both from the structural point of view in the case of particular environmental conditions (especially wind) and from the point of view of the speed and precision of the adjustment of the position of the arm supporting bracket.

In fact, in order to allow unrolling of the awning, the arms must be arranged at a certain angle with respect to the horizontal plane that contains their rotation pivots; therefore, in the same bracket that supports the arms there are two slots, located at and above the arm rotation pivots, whose axis is inclined outward with respect to the supporting wall, so as to allow two pivots, rigidly coupled to said 'arms and engaged with said slots, to limit the inclination angle of said arms, at the end of the opening of the awning; said slots, formed in the metal body of the bracket and engaged with metal pivots, by being rigid, can cause, in the presence of gusts of wind and therefore of flapping of the awning, failures and breakages of parts of said arms and/or deformations of other parts of the mutually coupled profiles.

Furthermore, the tensioning systems adopted in current canopies with unrollable awning, by being constituted by oscillating levers interposed between the wall-mounted bracket and the arm supporting bracket and actuated by a screw that acts on one end of said levers, entail a certain complication from the structural point of view and in terms of space occupation.

Therefore, the aim of the present invention is to provide a bracket for a canopy with roll-up awning, of the type with arms closable in caliper-like fashion and a continuous front that is rigidly coupled to the ends of said arms to support the awning, which is conceived and structured so as to obviate the drawbacks of current canopies of this type and most of all is capable of avoiding damage to the components of the structure in case of gusts of wind and the like.

An object of the invention is to provide a canopy of the above specified type that is structured so as to avoid altering the normal space occupation of current canopies and so as to not entail higher costs with respect to conventional canopies.

Another object of the invention is to provide a type of canopy with roll-up awning that is structured so as to allow quick and precise adjustment of the position of the bracket that supports the rotating arms with respect to the bracket that is rigidly coupled to the supporting wall.

This aim, these objects, and others which will become apparent hereinafter are achieved by a supporting bracket for canopies of the type with roll-up awning for outdoor use and particularly for caravans, campers, and the like, of the type that comprises a first bracket, substantially a metal profile, that can be applied to a supporting wall and is provided with means for stable coupling to two separate metal profile brackets, each of which is provided with means for the rotary support of arms that can be closed in a caliper-like fashion and with slotted means for limiting the inclination angle of said arms by engagement, in said slots, of pins that are rigidly coupled to said arms, and a continuous profile or front that is transversely rigidly coupled to the free end of said arms and a roll-up roller for said awning; said structure having, according to the present invention, on each one of said metal profile brackets for supporting said arms and above the rotation axis of said arms, a recess or hollow that is at least partially oval, runs along the entire width of said bracket, and is peripherally provided with teeth and/or prism-shaped protrusions, a tubular body made of at least partially flexible material, substantially thermosetting plastics, being stably inserted in each one of said oval recesses, said body being adapted to constitute a slot made of flexible material for the retention pins that are associated with said arms, a quadrangular groove being furthermore formed in each one of said arm supporting brackets and being adapted to contain a prism-shaped block for the stable locking of the arm supporting bracket on the bracket that is fixed to the wall by means of a tensioning screw or the like.

More particularly, said tubular body made of at least partially flexible material is preferably constituted by a nylon tube that is oval and inserted longitudinally within said oval recess.

Further characteristics and advantages of the present invention will become apparent from the following detailed description, given with reference to the accompanying drawings, which are provided only by way of non-limitative example and wherein:
figure 1 is a partially sectional side view of the canopy with roll-up awning, executed according to the invention;
figure 1A is a schematic view of the two sets of brackets that support the caliper-like arms, which are closed and joined between said supporting flanges;

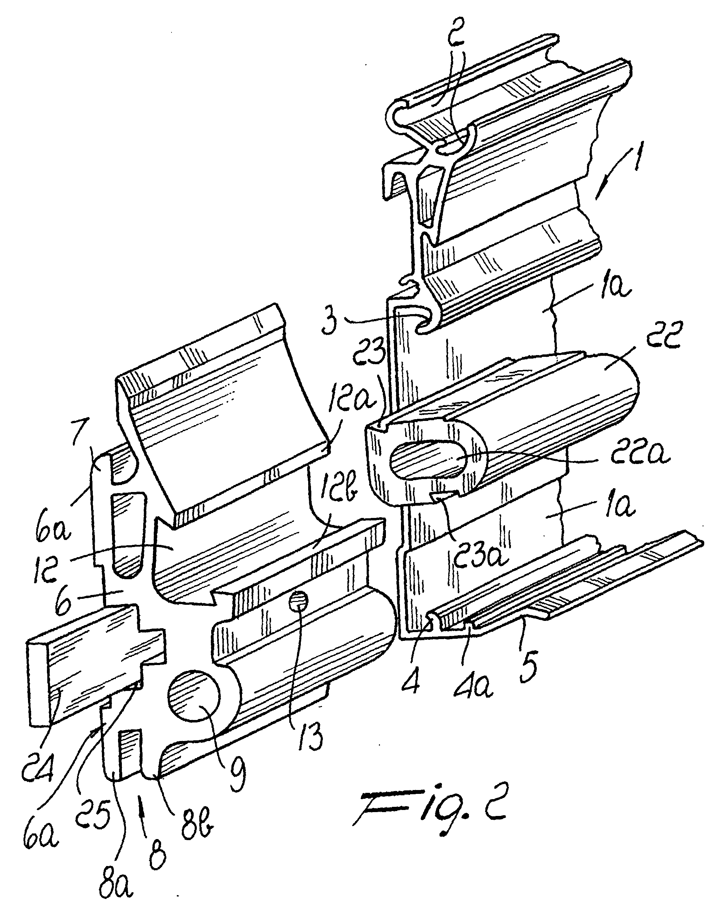

figure 2 is a perspective view of the fixed bracket and of the bracket that supports the caliper-like arms during the assembly step;
figure 3 is a sectional view of the wall-mounted bracket, coupled to the bracket that is meant to support the oscillating arms; and
figure 4 is a sectional view of the structure according to the invention in the configuration in which the arms retract until contact with the arm supporting bracket occurs.

With reference to the above figures, the supporting bracket for the caliper-like arms according to the invention and the corresponding improvements with respect to the brackets used in canopies with roll-up awnings of the same type consist of a series of modifications that substantially affect the arm supporting brackets, which are mutually spaced, and the means for locking said brackets to the bracket that is fixed to the wall.

Therefore, the description that follows, with reference to the figures, mainly relates to a canopy that has a conventional structure, to which the modifications according to the invention are applied; said modifications will be clearly indicated.

This having been said, a conventional canopy has a bracket 1 that is constituted by a metal profile that is contoured so as to have, in the upward region and along its entire length, a curved hollow 2 for the engagement of a curved flashing 2b, a curved intermediate hollow 3, and two lower longitudinal teeth 4-4a that protrude from a wing that is arranged at 90° with respect to the flat wing 1a and is generally designated by the reference numeral 5 in the various figures.

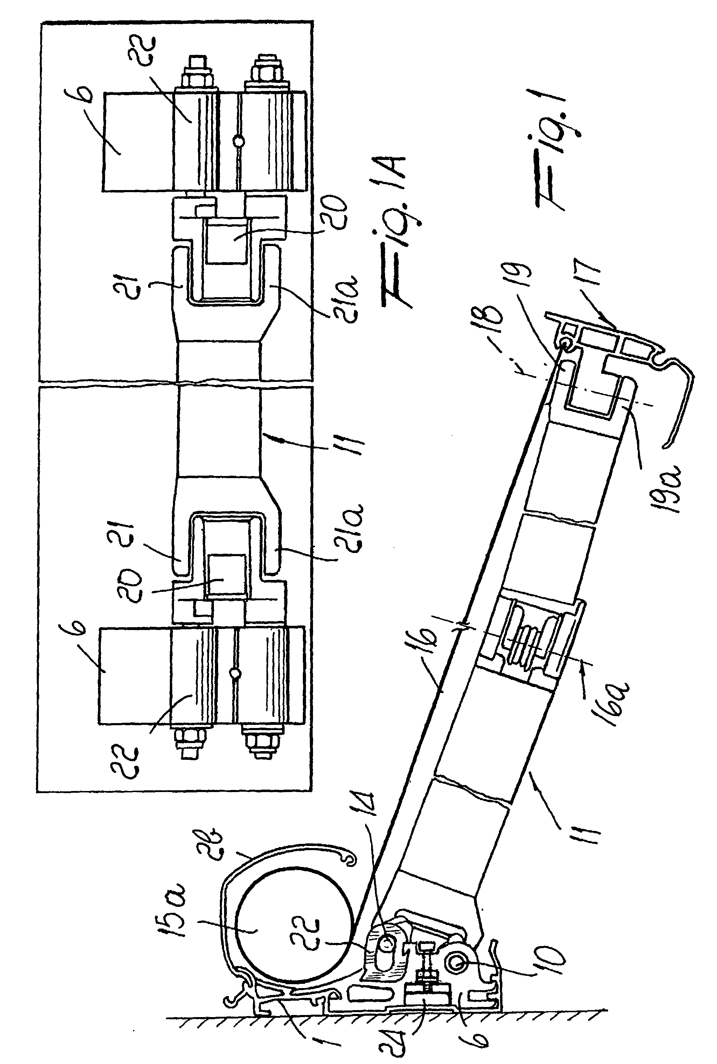

Said bracket 1 is fixed to a supporting wall "P", for example above a door or to the side walls of a caravan or the like, and constitutes the supporting structure for two identical brackets 6 (arm supporting brackets) that are mutually spaced, as shown schematically by way of example in figure 1A.

Each bracket 6 is constituted by a metal profile that is provided with a horizontal ridge 7 that is meant to engage in the hollow 3 of the fixed bracket, and is provided, in a downward region, with a groove 8 that forms two parallel teeth 8a and 8b that are adapted to fit, in a snap-together manner, between the teeth 4-4a that protrude from the fixed plate 1. Furthermore, the following elements are provided in each one of the brackets 6: a cylindrical cavity 9 for the rotation of the pivots 10 of the caliper-like arms 11 (figure 1); a cavity 12 having a cylindrical profile in the case of conventional canopies; and a transverse hole 13, whose purpose will become apparent hereinafter.

The two arm supporting brackets 6 can be inserted axially in the bracket 1 (starting from one side of said bracket 1) so that the teeth 4-4a can engage between the teeth 8a-8b of the bracket 6 and so that their rear face 6a is in contact with the internal faces 1a of the fixed bracket 1.

In the case of conventional canopies, the cavities 12 of the brackets 6 are oval holes, inside each of which a pin 14, also rigidly coupled to the arm, can move in order to stop the rotation of the arms upon a preset downward angular movement, usually of approximately 20° with respect to the horizontal (figure 1).

Furthermore, a roll-up roller 15a for the covering awning 16 is arranged between the curved wings 2a and 3a, respectively, of the fixed bracket and of the arm supporting brackets 6; therefore, said awning remains enclosed within the front curved flashing 2b.

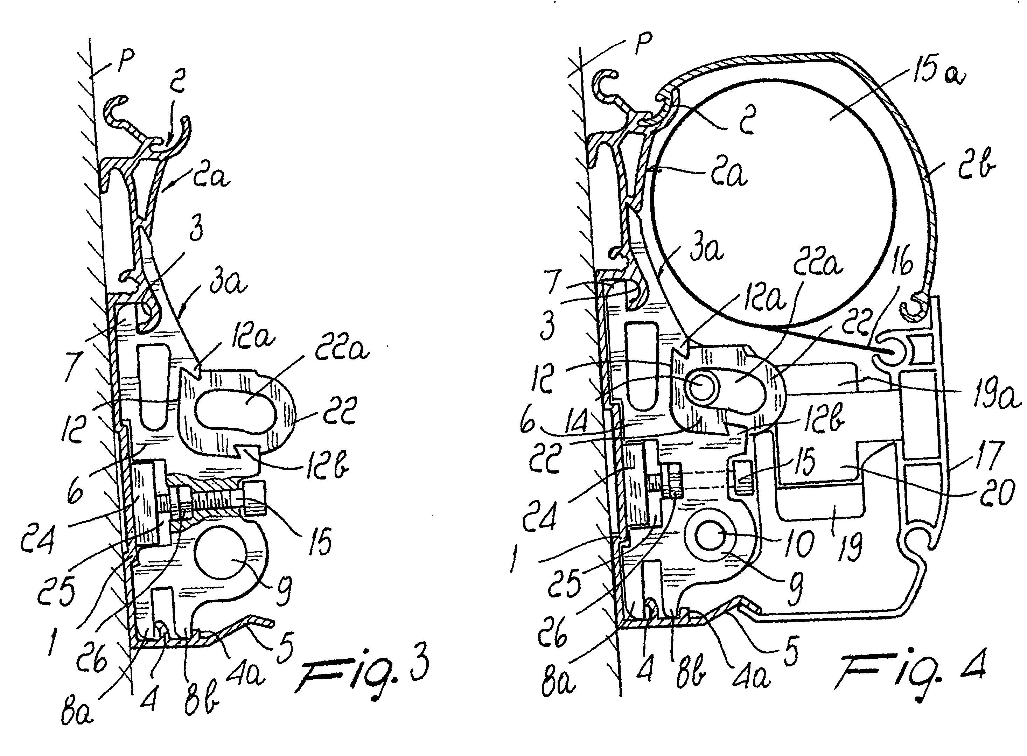

A curved profile 17 is provided at the end of the arms 11 that can close in a caliper-like fashion about a pivoting axis 16a (figure 1); said profile is pivoted to the arms within a fork 19-19a, can rotate about a transverse axis 18, and is meant to close the canopy (when the arms are retracted and the awning is rolled up as in figure 4) between the edge of the flashing 2b and the horizontal wing 5 of the fixed bracket 1.

The profile 17 thus constitutes a rigid closure front, and the horizontal side of the awning 16 is connected thereto.

Furthermore, the pins 10 and 14 of the arms are supported by a block 20 that can rotate within a fork 21-21a that protrudes axially from the end of said arms and rotates about an axis that is perpendicular to the rotation axis of the arms, so as to allow said arms to enter the flashing 2b so that their two half-arms are mutually adjacent and so that the continuous front 17 is in the closure position on said flashing.

In a canopy of this type, the present invention seeks to apply structural modifications that are such as to allow, as mentioned, avoidance of the breakage or failure of the various parts of said structure or of the awning in case of sudden gusts of wind and at the same allow very fast and more precise adjustment of the inclination of the arms.

Therefore, according to the invention, in the two arm supporting brackets 6 there is a curved hollow 12 that has a substantially oval cross-section; on the peripheral region of said cavity there are a longitudinal tooth 12a, which is directed inwards, and an equally longitudinal but substantially dovetail-shaped tooth 12b.

A tubular body 22 is inserted axially within said cavity 12, starting from one end of said cavity; said body is oval so as to form a continuous slot-like cavity 22a and is made of thermosetting plastics, such as nylon or the like; said nylon tubular body is externally provided with longitudinal grooves 23-23a whose profile is complementary to that of the ridges 12a and 12b of the cavity 12, so as to achieve stable engagement on the bracket 6 and most of all achieve safety against the escape of the nylon body 22 from its seat under the weight of the extended arms.

The slot-like cavity 22a is provided so as to accommodate, by translatory motion, the retainer pin 14 of the arm in order to limit the inclination angle of said arm.

In practice, it has been observed that the use of a tubular body 22 made of nonrigid and self-lubricating material allows the pin 14 of the arm to move without producing noise and most of all allows to perform a shock-absorbing function for said pivot in case of flapping of the arms and of the corresponding awning under the effect of strong gusts of wind or other causes.

Furthermore, since part of the tubular body 22 protrudes freely from the cavity 12 (figure 3), said tubular body can be easily replaced with others whose internal cavity 22a has a different length, so as to be able to adjust the stroke of the pin 14 and therefore the inclination angle of the arms according to the requirements.

Also according to the invention, a quadrangular groove 25 is formed in the arm supporting bracket 6 between the rotation seats of the pins 9 and 14 and runs along the entire width of the bracket 6; a block 24, shaped like a parallelepiped, is mounted therein so that it can move freely and is thus in direct contact with the flat face of the bracket. The end of a tensioning screw 15 acts against said block 24, is inserted in said cylindrical hole 13, and is engaged within a threaded nut or female thread 26; by actuating said screw, the block 24 is clamped against the fixed bracket 1 and the bracket 6 is retracted, thus ensuring the stable engagement of the end 7 of said bracket 6 within the hollow 3 of the fixed bracket 1 and therefore also the engagement of the lower tooth 8b between the two teeth 4-4a of said bracket 6.

The kinematic locking system, constituted by the block 24 and by the corresponding screw 15, by acting at right angles to both brackets 1 and 6, allows in practice to provide not only the stability of the engagement but also to simplify the locking operations with a device that is structurally simple and easy to maneuver.

In view of the above description it is evident that the arm supporting bracket allows to fully achieve the aim and objects presented in the preamble; furthermore, the provision of the slot as a separate element allows, in case of damage, to replace a single element instead of the entire supporting bracket.

Furthermore, it is evident that any structurally and functionally equivalent modifications and variations are within the scope of the protection of the invention as described above and illustrated and claimed hereafter.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Supporting bracket for the arms of a canopy with roll-up awning, particularly for caravans, campers, and the like, of the type that comprises a first bracket (1) and two separate metal profile brackets, the first bracket being substantially constituted by a metal profile, that can be applied to a supporting wall (P) and is provided with means for stable coupling to the two separate metal profile brackets (6), each of which is provided with means (10) for the rotary support of arms (11) that can be closed in a caliper-like fashion and with slotted means (12) for limiting the inclination angle of said arms (11) by engagement, in said slots (12), of pins (14) that are rigidly coupled to said arms (11), the supporting bracket further comprising a continuous profile or front (17) that is transversely rigidly coupled to the free end of said arms (11) and a roll-up roller (15a) for said awning;
**characterized in that** on each one of said two metal profile brackets (6) for supporting said arms (11) there is, above the rotation axis (16a) of said arms (11), a recess or hollow (12) that is at least partially oval, runs along the entire width of said metal profile bracket (6), and is peripherally provided with teeth and/or prism-shaped protrusions (12a, 12b), a tubular body (22) made of at least partially flexible material, substantially thermosetting plastics, being stably inserted in each one of said oval recesses (12), said body (22) being adapted to constitute a slot (22a) made of flexible material for the retention pins (14) that are associated with said arms (11), a quadrangular groove (25) being furthermore formed in each one of said two metal profile brackets (6) and being adapted to contain a prism-shaped block (24) for the stable locking of the metal profile bracket (6) on the first bracket (1) that is fixed to the wall (P) by means of a tensioning screw (15) or the like.

2. Supporting bracket according to claim 1, **characterized in that** said tubular body (22) made of plastics is constituted by a nylon tube that is inserted longitudinally in said oval recess (12) and is retained therein by virtue of the engagement of said teeth (12a, 12b) of the recess (12) within corresponding grooves (23, 23a) formed longitudinally on said tubular body.

3. Supporting bracket according to claims 1 and 2, **characterized in that** said quadrangular groove (25) that contains said locking block (24) is open on the rear flat face of the arm supporting bracket (6) between said slot (12) and the arm rotation pivot (10), said block (24) being forced between the wall-mounted bracket (1) and the arm supporting bracket (6) by means of at least one tensioning screw (15) that is rotatably mounted within a female thread or a nut (26) that is rigidly coupled to the arm supporting bracket (6) and is orientated at right angles to said block (24).

## Patentansprüche

1. Stützleiste für die Arme einer Markise mit aufrollbarem Tuch, insbesondere für Wohnwagen, Wohnmobile und dergleichen, der Art, die eine erste Leiste (1) und zwei separate Metallprofilleisten (6) umfaßt, wobei die erste Leiste im wesentlichen aus einem Metallprofil besteht, das an eine Tragwand (P) angebracht werden kann und mit einer Einrichtung zur stabilen Kopplung mit den zwei separaten Metallprofilleisten (6) versehen ist, von denen jede mit einer Einrichtung (10) für die drehbare Abstützung der Arme (11), die in einer zirkelartigen Weise geschlossen werden können, und mit einer geschlitzten Einrichtung (12) zum Begrenzen des Neigungswinkels der Arme (11) durch Eingriff von Stiften (14) in die Schlitze (12), welche starr mit den Armen (11) gekoppelt sind, versehen ist, wobei die Stützleiste ferner ein durchgehendes Profil oder eine Vorderseite (17), die quer starr mit dem freien Ende der Arme (11) gekoppelt ist, und eine Aufrollwalze (15a) für das Tuch umfaßt; **dadurch gekennzeichnet, daß** an jeder der zwei Metallprofilleisten (6) zum Abstützen der Arme (11) über der Drehachse (16a) der Arme (11) eine Aussparung oder Höhlung (12) vorhanden ist, die zumindest teilweise oval ist, entlang der gesamten Breite der Metallprofilleiste (6) verläuft und am Umfang mit Zähnen und/oder prismenförmigen Vorsprüngen (12a, 12b) versehen ist, wobei ein röhrenförmiger Körper (22), der aus einem zumindest teilweise biegsamen Material, im wesentlichen wärmehärtbarem Kunststoff, besteht, stabil in jede der ovalen Aussparungen (12) eingefügt ist, wobei der Körper (22) dazu ausgelegt ist, einen Schlitz (22a), der aus einem biegsamen Material besteht, für die Haltestifte (14) zu bilden, welche den Armen (11) zugeordnet sind, wobei ferner eine viereckige Nut (25) in jeder der zwei Metallprofilleisten (6) ausgebildet ist und dazu ausgelegt ist, einen prismenförmigen Block (24) für die stabile Verriegelung der Metallprofilleiste (6) an der ersten Leiste (1) zu enthalten, welche an der Wand (P) mittels einer Spannschraube (15) oder dergleichen befestigt ist.

2. Stützleiste nach Anspruch 1, **dadurch gekennzeichnet, daß** der röhrenförmige Körper (22), der aus Kunststoff besteht, aus einem Nylonrohr besteht, das der Länge nach in die ovale Aussparung (12) eingefügt ist und darin durch den Eingriff der Zähne (12a, 12b) der Aussparung (12) in entsprechende Nuten (23, 23a), die der Länge nach an dem röhrenförmigen Körper ausgebildet sind, festgehalten wird.

3. Stützleiste nach den Ansprüchen 1 und 2, **dadurch gekennzeichnet, daß** die viereckige Nut (25), die den Verriegelungsblock (24) enthält, an der hinteren ebenen Fläche der Armstützleiste (6) zwischen dem Schlitz (12) und dem Armdrehzapfen (10) offen ist, wobei der Block (24) zwischen die an der Wand montierte Leiste (1) und die Armstützleiste (6) durch mindestens eine Spannschraube (15) gedrückt ist, die drehbar innerhalb eines Innengewindes oder einer Mutter (26) montiert ist, die starr mit der Armstützleiste (6) gekoppelt ist und in rechten Winkeln zum Block (24) orientiert ist.

## Revendications

1. Console de support pour les bras d'un auvent avec un store à enroulement, particulièrement pour des caravanes, des véhicules de camping et analogues, du type qui comprend une première console (1) et deux consoles à profil métallique séparées, la première console étant sensiblement constituée par un profilé métallique, qui peut être appliqué à une paroi de support (P) et est muni de moyens pour un accouplement stable aux deux consoles à profil métallique séparées (6), dont chacune est munie de moyens (10) pour le support rotatif des bras (11) qui peuvent être fermés d'une façon analogue à un compas, et de moyens à fentes (12) pour limiter l'angle d'inclinaison desdits bras (11) par engagement, dans lesdites fentes (12), d'axes (14) qui sont rigidement couplés auxdits bras (11), la console de support comprenant de plus un profilé ou devant continu (17) qui est transversalement couplé rigidement à l'extrémité libre desdits bras (11), et un rouleau d'enroulement (15a) pour ledit store,
**caractérisée en ce que** sur chacune des deux dites consoles à profil métallique (6) pour le support desdits bras (11), il est prévu, au-dessus de l'axe de rotation (16a) desdits bras (11), un évidement ou un creux (12) qui est au moins partiellement ovale, s'étend le long de la largeur totale de ladite console à profil métallique (6), et est muni périphériquement de dents et/ou de saillies conformées en prismes (12a, 12b), un corps tubulaire (22) réalisé en une matière au moins partiellement souple, sensiblement en matière plastique thermodurcissable, étant inséré de façon stable dans chacun desdits évidements ovales (12), ledit corps (22) étant adapté pour constituer une fente (22a) réalisée en matière souple pour les axes de maintien (14) qui sont associés auxdits bras (11), une rainure quadrangulaire (25) étant par ailleurs formée dans chacune des deux dites consoles à profil métallique (6) et étant adaptée pour contenir un bloc en forme de prisme (24) pour le verrouillage stable de la console à profil métallique (6) sur la première console (1) qui est fixée à la paroi (P) par l'intermédiaire d'une vis de tension (15) ou analogue.

2. Console de support selon la revendication 1,
**caractérisée en ce que** ledit corps tubulaire (22) réalisé en matière plastique est constitué par un tube en Nylon qui est inséré longitudinalement dans lesdits évidements ovales (12) et est maintenu dans ceux-ci grâce à l'engagement desdites dents (12a, 12b) de l'évidement (12) dans des rainures correspondantes (23, 23a) formées longitudinalement sur ledit corps tubulaire.

3. Console de support selon les revendications 1 et 2,
**caractérisée en ce que** ladite rainure quadrangulaire (25), qui contient ledit bloc de verrouillage (24), est ouverte sur la face plate arrière de la console de support de bras (6) entre ladite fente (12) et le pivot de rotation des bras (10), ledit bloc (24) était forcé entre la console (1) montée sur la paroi et la console de support de bras (6) par l'intermédiaire d'au moins une vis de tension (15) qui est montée de façon rotative dans un taraudage ou un écrou (26) qui est rigidement couplé à la console de support de bras (6) et est orienté à angle droit par rapport audit bloc (24).
